# FASCICULE DE BREVET EUROPEEN

(11) **EP 3 414 732 B1**
(45) Date de publication et mention de la délivrance du brevet: **15.09.2021**
(21) Numéro de dépôt: 17702418.9
(22) Date de dépôt: 03.01.2017
(51) Int. Cl.: G06K 9/00, G06K 9/46

(54) **PROCÉDÉ D'IDENTIFICATION D'UN SPECTACLE DANS UNE VIDÉO FILMÉE PAR UNE CAMÉRA D'UN SPECTATEUR**
VERFAHREN ZUR IDENTIFIZIERUNG EINES AUFTRITTS IN EINEM VON DER KAMERA EINES ZUSCHAUERS GEFILMTEN VIDEOS
METHOD FOR IDENTIFYING A SHOW IN A VIDEO FILMED BY A CAMERA OF A SPECTATOR

(30) Priorité: 12.02.2016 FR 1651137
(43) Date de publication de la demande: 19.12.2018
(73) Titulaire: Viaccess, 92057 Paris La Défense Cedex (FR)
(72) Inventeur: PIRA, Emmanuel, 35520 Melesse (FR)
(74) Mandataire: Colombo, Michel
(86) Numéro de dépôt international: PCT/FR2017/050004
(87) Numéro de publication internationale: WO 2017/137672

(56) Documents cités:
- WO-A1-2016/026944
- US-A1- 2006 159 302
- Anonymous: "YouTube - Wikipedia, the free encyclopedia", , 6 février 2016 (2016-02-06), XP055301642, Extrait de l'Internet: URL:https://en.wikipedia.org/w/index.php?t itle=YouTube&oldid=703571413 [extrait le 2016-09-12]
- YASUNORI ISHIKAWA ET AL: "Practical Evaluation of Illumination Watermarking Technique Using Orthogonal Transforms", JOURNAL OF DISPLAY TECHNOLOGY, IEEE SERVICE CENTER, NEW YORK, NY, US, vol. 6, no. 9, 1 septembre 2010 (2010-09-01), pages 351-358, XP011334416, ISSN: 1551-319X, DOI: 10.1109/JDT.2010.2049336

## Description

L'invention concerne un procédé d'identification d'un spectacle dans une vidéo filmée par une caméra d'un spectateur. L'invention concerne également un procédé automatique d'interruption de la distribution d'une vidéo téléchargeable à partir d'une plate-forme de partage de vidéos. Enfin, l'invention concerne aussi un dispositif d'identification et un support d'enregistrement d'informations pour mettre en œuvre ces procédés.

Un spectacle est un événement qui se déroule dans une ou plusieurs scènes et qui est joué devant des spectateurs. Par exemple, un spectacle est une représentation jouée par des acteurs tel qu'un événement sportif, un concert, ou une pièce de théâtre. Un spectacle n'est cependant pas toujours joué par des acteurs. Par exemple, un spectacle peut aussi être un spectacle son et lumière ou similaire.

Une scène est un lieu où se déroule un spectacle susceptible d'être filmé par une caméra d'un spectateur. Par exemple, une scène peut être un terrain de sport ou une salle de spectacle. Dans un autre exemple, une scène comporte le terrain d'où est tiré un feu d'artifice, où un objet disposé sur ce terrain et susceptible de servir de support à un panneau d'affichage. Un tel objet est par exemple un rocher, un arbre, un poteau, une barrière, un mur ou un véhicule.

Aujourd'hui, à l'aide d'un simple smartphone, un spectateur peut filmer un spectacle et transmettre le film résultant, quasiment en temps réel, à un grand nombre de tiers. Par exemple, à cet effet, la vidéo en train d'être filmée est transmise à une plate-forme de partage de vidéos qui permet à des tiers de télécharger cette vidéo au fur et à mesure que les images qu'elle contient sont reçues.

Dans cette description, par téléchargement d'une vidéo, on désigne aussi bien :
1) l'action de télécharger, depuis la plate-forme de partage, le fichier complet de la vidéo puis de l'enregistrer dans une mémoire non volatile pour ultérieurement jouer cette vidéo enregistrée dans la mémoire non volatile, et
2) l'action de télécharger « en direct » la vidéo au fur et à mesure que la vidéo est diffusée par l'intermédiaire de la plate-forme de partage, c'est-à-dire habituellement de télécharger un morceau de la vidéo puis d'enregistrer ce morceau de vidéo dans une mémoire volatile ou une mémoire vive, puis de jouer ce morceau avant de recommencer avec le morceau suivant de la vidéo. Généralement, les morceaux de vidéo déjà joués sont ensuite automatiquement effacés pour libérer de la place pour l'enregistrement des nouveaux morceaux suivants.

Le mode de diffusion de la vidéo au titre de l'action 2) est plus connu sous le terme anglais de « streaming ».

Si le spectacle filmé par le téléspectateur est protégé par des droits d'auteur, sa distribution par l'intermédiaire d'une plate-forme de partage peut être illégale. Pour lutter contre une telle distribution illégale de vidéo, il est souhaitable d'être capable d'identifier simplement et rapidement le spectacle filmé dans la vidéo.

Dans des contextes analogues de distribution illégale de contenus, il est connu de tatouer à cet effet une vidéo avec un identifiant d'une partie prenante de cette distribution afin de pouvoir rapidement en identifier l'origine ou le destinataire. Toutefois, le tatouage d'une vidéo intervient après l'enregistrement de la vidéo par une caméra. Or, dans le cas des caméras des spectateurs, il est très difficile d'incorporer un tel tatouage après que les spectateurs aient enregistré leurs vidéos. En effet, cela suppose généralement au moins un minimum de coopération de la part du spectateur. Or, dans le cas où le spectateur peut soupçonner que ce qu'il est en train de faire est illégal, il est difficile de compter sur sa collaboration. En outre, le tatouage est relativement complexe en termes de ressources de calcul requises, en insertion comme en détection. Il est donc mal adapté à une détection en temps réel, qui plus est dans des vidéos, dont la durée peut ne pas dépasser quelques secondes.

La demande US2006/0159302 propose une solution intéressante pour tatouer une vidéo sans nécessiter la coopération du spectateur. La demande US2006/0159302 propose en effet de projeter une marque sur la scène dans laquelle se joue le spectacle. Lorsque le spectateur filme le spectacle, il enregistre en même temps la marque projetée sur la scène. Cela permet donc d'incruster cette marque dans toutes les vidéos de ce spectacle filmées à partir de n'importe quelle caméra d'un spectateur et sans nécessiter la coopération du spectateur.

Dans la demande US2006/0159302, la marque est projetée sur la scène par un projecteur 120 (figure 1 de US2006/0159302). Les conditions d'éclairage de la scène, sa réflectivité et l'atmosphère traversée par le faisceau du projecteur sont susceptibles de varier fortement et rapidement. Cela peut rendre illisible la marque projetée dans la scène. Pour faire en sorte que la marque projetée soit lisible dans les vidéos filmées par les caméras des spectateurs, US2006/0159302 propose d'ajuster en permanence les caractéristiques optiques de la marque, comme son intensité lumineuse, et/ou de contrôler l'éclairage ambiant ou les motifs de l'arrière-plan sur lequel est projetée la marque, etc. Grâce à cela la marque est lisible dans les vidéos filmées. Pour réaliser cet ajustement permanent des caractéristiques optiques de la marque, la demande US2006/0159302 utilise au moins une caméra de contrôle 130 (figure 1 de US2006/0159302) capable de mesurer la lisibilité, dans la vidéo, de la marque projetée dans la scène. L'utilisation d'une telle caméra de contrôle complexifie encore de façon importante le procédé de tatouage de la vidéo décrit dans la demande US2006/0159302.

Par ailleurs, comme le note justement la demande US2006/0159302, une caméra 110 (figure 1 de US2006/0159302) d'un spectateur peut voir la marque depuis un point de vue très différent de celui du projecteur 120 ou de la caméra de contrôle 130. Cela introduit des déformations géométriques dans la marque filmée par l'appareil 110. Ces déformations géométriques sont d'autant plus importantes que l'angle entre l'axe focal du projecteur 120 et l'axe focal de la caméra 110 augmente. Au-delà d'un certain seuil, ces déformations rendent la marque filmée par la caméra 110 illisible de sorte que la scène filmée ne peut plus être identifiée automatiquement à l'aide de cette marque. Ainsi, même si la demande US2006/0159302 assure en permanence une lisibilité correcte de la marque projetée, cela n'est pas suffisant pour garantir que cette marque sera lisible dans toutes les vidéos filmées par les spectateurs.

De l'état de la technique est également connu de :
- Anonymous : « YouTube - Wikipedia, the free encyclopedia », 6/02/2016, https://en.wikipedia.org/w/index.php?title=YouTube&oldid=703571413,
- Yasunori Ishikawa et Al : « Practical Evaluation of Illumination Watermarking Technique Using Orthogonal Transforms », Journal of Display Technology, IEEE, Service Center, New York, vol. 6, n°9, 1/09/2010, pages 351-358,
- WO2016/026944A1

L'invention a donc pour objet de proposer un procédé d'identification d'un spectacle dans une vidéo filmée par un spectateur dans lequel une marque identifiant ce spectacle est insérée dans la vidéo sans nécessiter la coopération du spectateur et tout en utilisant un procédé pour insérer et détecter la marque plus simple à mettre en œuvre que celui de la demande US2006/0159302. En particulier, le procédé proposé ne doit pas présenter les inconvénients suivants :
- la nécessité d'utiliser une caméra de contrôle pour ajuster en permanence la lisibilité de la marque, et
- une diminution rapide de la lisibilité de la marque dans la vidéo filmée dès que le point de prise de vue s'éloigne de celui d'où est projetée la marque.

Elle a donc pour objet un procédé d'identification d'un spectacle dans une vidéo filmée par une caméra d'un spectateur conforme à la revendication 1. L'invention est aussi définie par les revendications indépendantes 9 et 10.

Le procédé d'identification ci-dessus préserve les avantages du procédé de la demande US2006/0159302. En particulier, puisque le panneau d'affichage est situé à l'intérieur de la scène où est joué le spectacle à identifier, toute vidéo du spectacle filmée à partir d'une caméra a de fortes chances de comporter la ou les couleurs spécifiques affichées et ceci quelle que soit la caméra utilisée. Ainsi, à moins d'arrêter de filmer, l'incrustation de la ou des couleurs spécifiques dans la vidéo filmée par le spectateur ne peut pas être facilement évitée.

L'utilisation d'un panneau d'affichage situé à l'intérieur de la scène filmée permet de maîtriser précisément les caractéristiques de chaque couleur affichée dans la scène. En particulier, contrairement à la projection d'une marque comme décrit dans la demande US2006/0159302, l'utilisation d'un panneau d'affichage rend les caractéristiques de la ou des couleurs spécifiques, telles qu'affichées, indépendantes de la réflectivité ou de la couleur des éléments de la scène. Il n'est donc plus nécessaire de prévoir un capteur, tel que la caméra de contrôle 130 de la demande US2006/0159302, pour contrôler la lisibilité de la marque présente dans la scène. Cela simplifie donc grandement la mise en œuvre du procédé d'identification du spectacle dans la vidéo.

De plus, les caractéristiques d'une couleur affichée par un panneau d'affichage telle que filmée par une caméra sont indépendantes de la position de cette caméra par rapport au panneau d'affichage. Dès lors, lors de la recherche de la marque dans les images, il n'est pas nécessaire de prendre en compte une éventuelle déformation géométrique de la marque causée par le point de vue. Cela aussi simplifie grandement la mise en œuvre du procédé d'identification.

Le procédé d'identification peut comporter une ou plusieurs des caractéristiques des revendications dépendantes.

Ces modes de réalisation du procédé d'identification présentent en outre les avantages suivants :
- Le comptage du nombre de pixels dont la couleur correspond à la couleur spécifique est un procédé simple et efficace pour indiquer de façon fiable si la couleur spécifique est présente dans une image. Grâce à cela, l'identification d'un spectacle dans une vidéo peut être réalisée très rapidement et quasiment en temps réel.
- Le fait de prévoir des marges de tolérance lors de l'établissement d'une correspondance entre la couleur d'un pixel et la couleur spécifique rend le procédé d'identification plus robuste vis-à-vis du niveau de sensibilité des photodétecteurs des caméras utilisées par les spectateurs. En effet, les caméras peuvent être équipées de photodétecteurs plus ou moins sensibles et plus ou moins précis. Ces différences de précision et de sensibilité se traduisent par le fait que les valeurs qui codent la couleur spécifique dans une image filmée par une caméra peuvent ne pas correspondre exactement aux valeurs qui codent cette même couleur spécifique dans la base de données. Les marges de tolérance permettent de remédier à ce problème sans avoir recours à une caméra de contrôle 130 telle que décrite dans la demande US2006/0159302.
- L'utilisation des couleurs spécifiques pour former un code-barres permet de déclencher la lecture de ce code-barres uniquement si, au préalable, ces couleurs spécifiques ont été trouvées dans l'image téléchargée. Ainsi, les mêmes couleurs spécifiques remplissent à la fois une fonction de marqueur pour l'identification du spectacle et une fonction de codage d'une information supplémentaire dans l'image.
- L'affichage de la ou des couleurs spécifiques uniquement pendant des périodes actives très courtes permet de rendre furtive la mise en œuvre du procédé, et donc non perceptible à l'œil nu par un être humain.
- L'utilisation du panneau d'affichage pour afficher d'autres informations pendant les périodes inactives permet de remplir, à l'aide du même panneau d'affichage, deux fonctions différentes, à savoir l'identification d'une scène et l'affichage d'informations supplémentaires à destination des spectateurs.

L'invention sera mieux comprise à la lecture de la description qui va suivre, donnée uniquement à titre d'exemple non limitatif et faite en se référant aux dessins sur lesquelles :
- la figure 1 est une illustration schématique, en partie en perspective, d'un système automatique d'interruption de la distribution d'une vidéo téléchargeable à partir d'une plate-forme de partage de vidéos ;
- la figure 2 est une illustration schématique d'une marque utilisée dans le système de la figure 1 ;
- la figure 3 est un organigramme d'un procédé automatique d'interruption de la distribution d'une vidéo téléchargeable à partir d'une plate-forme de partage de vidéos.

Dans ces figures, les mêmes références sont utilisées pour désigner les mêmes éléments. Dans la suite de cette description, les caractéristiques et fonctions bien connues de l'homme du métier ne sont pas décrites en détail.

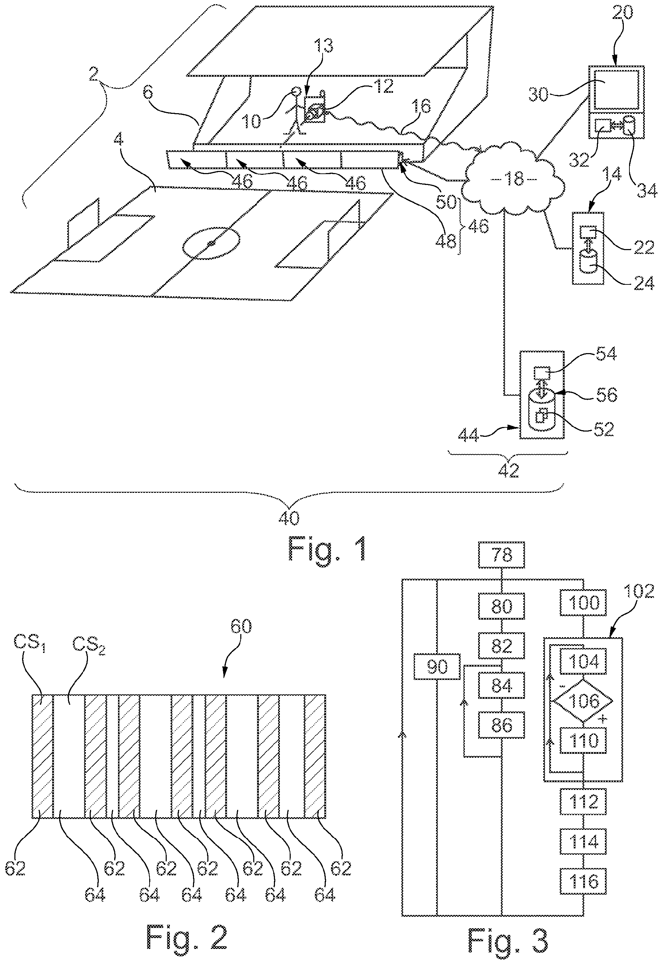

La figure 1 représente une scène 2 dans laquelle se joue un spectacle dont on souhaite contrôler la distribution sous forme de vidéo. Dans cet exemple particulier, la scène 2 comporte :
- un terrain 4 de football, et
- des tribunes 6 entourant le terrain 4.

Pour simplifier la figure 1, seule une portion des tribunes 6 a été représentée. Toutefois, la scène 2 comporte, en face des tribunes représentées, d'autres tribunes non représentées.

Pour simplifier la figure, les joueurs sur le terrain 4 n'ont pas non plus été représentés.

Dans cet exemple, le spectacle est un match de football joué uniquement sur le terrain 4. Ainsi, dans ce mode de réalisation, lorsque le spectacle est identifié, la scène 2 l'est aussi et vice-versa. L'identifiant du spectacle et l'identifiant de la scène 2 sont ici reliés l'un à l'autre par une fonction bijective. Les termes « identifiant de la scène » et « identifiant du spectacle » sont donc équivalents. Dès lors, dans la description de ce mode particulier de réalisation, ils sont utilisés de façon interchangeable.

Lors d'un match de football, les tribunes 6 comportent un spectateur 10 équipé d'une caméra 12. Le spectateur 10 filme le match qui se déroule sur le terrain 4 avec cette caméra 12. La caméra 12 est raccordée à une plate-forme 14 de partage de vidéos par l'intermédiaire d'une liaison 16 et d'un réseau 18 grande distance de transmission d'informations. A cet effet, la caméra 12 est intégrée ou raccordée à un appareil 13 directement transportable à la main par un être humain. Ici, l'appareil 13 est un smartphone et la caméra 12 est la caméra intégrée à ce smartphone. Dans ce cas, la liaison 16 est une liaison sans fil de transmission d'informations. Par exemple, la liaison 16 est conforme au standard UMTS (Universal Mobile Telecommunications System) ou CDMA 2000 pour les téléphones 3G ou au standard LTE (Long Term Evolution) et WiMax pour les téléphones 4G.

Le réseau 18 est typiquement un réseau à commutation de paquets. Par exemple, il s'agit du réseau connu sous le terme anglais de World Wide Web ou tout simplement appelé « Internet ».

La plate-forme 14 reçoit la vidéo en train d'être filmée par la caméra 12 et peut diffuser, en streaming, pratiquement en temps réel, cette vidéo vers un grand nombre de terminaux tiers. Les terminaux tiers sont des terminaux distincts de l'appareil 13 et généralement situés à plusieurs kilomètres du spectateur 10 et de sa caméra 12. Ces terminaux tiers sont connectés à la plate-forme 14 par l'intermédiaire d'un réseau grande distance de transmission d'informations comme le réseau 18.

De telles plate-formes de partage de vidéos sont bien connues. Par exemple, ici, la plate-forme 14 est la plate-forme exploitée actuellement sous le nom commercial de « Meerkat ®» ou « Periscope ®».

La plate-forme 14 comporte un ou plusieurs serveurs informatiques. Pour simplifier la figure 1, un seul serveur informatique est représenté. Il comporte un microprocesseur programmable 22 associé à une mémoire ou à un ensemble de mémoires 24. La mémoire 24 comporte les instructions nécessaires pour la mise en œuvre du procédé de la figure 3. La mémoire 24 peut aussi contenir la vidéo filmée par la caméra 12.

Pour simplifier la figure 1, un seul terminal tiers 20 a été représenté. Les autres terminaux tiers sont identiques ou similaires au terminal 20. Le terminal 20 comporte typiquement :
- un écran 30 pour afficher la vidéo distribuée par la plate-forme 14 à travers le réseau 18,
- un microprocesseur 32 programmable, et
- une mémoire 34 comportant les instructions nécessaires pour exécuter le procédé de la figure 3 lorsqu'elles sont exécutées par le microprocesseur 32.

Comme indiqué dans l'introduction de cette demande, la diffusion d'un match joué sur le terrain 2 peut être soumise à des droits payants de diffusion. Le spectateur 10 qui filme ce match et le diffuse vers le terminal 20 en utilisant la plate-forme 14 contourne de façon illégale ces droits payants.

Dans le cas des spectacles tels que les événements sportifs, il est donc important de mettre fin en temps réel à la distribution illégale de la vidéo filmée par la caméra 12. Par temps réel, on désigne ici le fait qu'il doit être mis fin à la distribution illégale de cette vidéo le plus rapidement possible et, en particulier, au moins avant la fin du spectacle. En effet, on comprend que la distribution illégale, seulement après la fin du match, de la vidéo du match filmé par la caméra 12 présente un intérêt moindre pour les utilisateurs des terminaux tiers 20. En effet, à ce moment là, le résultat du match est connu. A l'inverse, si la vidéo filmée par la caméra 12 est distribuée en temps réel par la plate-forme 14, l'offre illégale peut alors sérieusement concurrencer l'offre légale.

Pour cela, un système 40 automatique d'interruption de la distribution d'une vidéo filmée par un spectateur va maintenant être décrit. Par la suite, le système 40 est décrit dans le cas particulier du match de football joué sur le terrain 4. Toutefois, l'enseignement donné dans ce cas particulier peut facilement être répliqué pour interdire la distribution d'autres spectacles, par exemple joués simultanément, dans d'autres scènes.

Le système 40 comporte un dispositif automatique 42 d'identification d'un spectacle dans une vidéo distribuée par la plate-forme 14. Ce dispositif 42 comporte notamment :
- un appareil 44 de traçage de vidéos filmées par des spectateurs, et
- des panneaux d'affichage 46 commandables.

Chaque panneau d'affichage 46 comporte un écran 48 divisé en une multitude de pixels. Typiquement, le nombre de pixels de l'écran 48 est supérieur à 100 ou 1000 ou 10000. Chaque pixel est capable de générer et d'afficher une seule couleur à la fois choisie parmi un grand nombre de couleurs visibles possibles. Le nombre de couleurs possibles est typiquement supérieur à 100, 1000 ou 10000. Chaque couleur possible est codée par un jeu de valeurs. Ici, chaque couleur est codée selon le système de codage RVB (Rouge Vert Bleu) ou RGB (Red Green Blue) en anglais. Dans ce système de codage, chaque couleur est définie par un triplet de valeurs noté R, G, B par la suite. Chaque panneau d'affichage 46 comporte aussi une unité électronique de commande 50 capable :
- de recevoir une marque de couleur à afficher, et
- en réponse, à commander chaque pixel de l'écran 48 pour afficher la marque reçue.

Ici, l'unité de commande 50 est raccordée à l'appareil 44 par l'intermédiaire du réseau 18 pour recevoir la marque à afficher.

De préférence, l'écran 48 présente un grand angle d'ouverture horizontale. Par « angle d'ouverture horizontale » d'un écran, on désigne l'angle entre :
- l'axe central de l'écran 48, c'est-à-dire l'axe perpendiculaire à cet écran et qui passe par le centre géométrique de cet écran 48, et
- le rayon, émis par un pixel de l'écran 48 et contenu dans un plan horizontal contenant l'axe central, le plus incliné par rapport à cet axe central.

Typiquement, l'angle d'ouverture horizontale est supérieur à 30° et, de préférence, à 45° ou 60°.

Également, de préférence, l'écran 48 présente aussi un grand angle d'ouverture verticale. Par angle d'ouverture verticale, on désigne l'angle entre l'axe central de l'écran 48 et le rayon, émis par un pixel de l'écran 48 et contenu dans un plan vertical contenant l'axe central, le plus incliné par rapport à cet axe central. Typiquement, l'angle d'ouverture verticale est supérieur ou égal à 25° ou 45° ou 60°.

Généralement, la surface d'affichage de l'écran 48 est grande, c'est-à-dire supérieure à 0,5 m² et, de préférence, supérieure à 1 m² ou 2 m² ou 3 m².

Les panneaux d'affichage 46 sont disposés à l'intérieur de la scène 2 de manière à ce que, quelle que soit la position du spectateur 10 à l'intérieur des tribunes 6, dans plus de 10 % ou 25 % ou 50 % des images filmées à l'aide de la caméra 12, le cumul des surfaces des écrans 48 dans ces images filmées représente plus de 0,5 % et, de préférence, plus de 1 % ou 5 % de la surface de cette image. Par exemple, à cet effet, les panneaux d'affichage 46 sont disposés tout autour du terrain 4 et sont contigus les uns aux autres.

Ici, les panneaux d'affichage 46 sont choisis parmi les panneaux d'affichage déjà existants dans la scène 2. Par exemple, les panneaux d'affichage 46 sont les panneaux d'affichage publicitaire classiquement situés sur le pourtour du terrain 4.

L'appareil 44 commande les panneaux d'affichage 46 pour afficher une marque de couleur permettant d'identifier simplement et rapidement la scène 2 dans les vidéos filmées par les spectateurs.

A cet effet, l'appareil 44 comporte une base de données 52 contenant pour chaque spectacle différent à identifier :
- un identifiant du spectacle qui permet de distinguer sans ambiguïté ce spectacle, d'autres spectacles joués simultanément dans d'autres scènes dans lesquelles sont également installés d'autres panneaux d'affichage 46 pour identifier ces autres spectacles,
- des valeurs codant chaque couleur spécifique associée à ce spectacle, et
- des marges de tolérance haute et basse pour chacune de ces valeurs codant chaque couleur spécifique.

Ici, puisque les couleurs sont codées avec le codage RGB, on note Rᵢ, Gᵢ, Bᵢ, les trois valeurs qui codent la couleur spécifique CSᵢ, où l'indice i est l'identifiant de la couleur spécifique. Pour ces trois valeurs Rᵢ, Gᵢ et Bᵢ, on note, respectivement, Mh_{Ri}, Mb_{Ri}, Mh_{Gi}, Mb_{Gi}, Mh_{Bi} et Mb_{Bi} les marges haute et basse pour chacune de ces valeurs.

L'appareil 44 est aussi capable de télécharger des images des vidéos distribuées par la plate-forme 14 ainsi que de commander, en réponse, cette plate-forme 14. A cet effet, l'appareil 44 est raccordé à la plate-forme 14 par l'intermédiaire, par exemple, du réseau 18.

Typiquement, l'appareil 44 est un serveur informatique comportant un microprocesseur 54 programmable et une mémoire 56. La mémoire 56 comporte les instructions nécessaires à l'exécution du procédé de la figure 3. Ici, la mémoire 56 contient également la base de données 52.

La figure 2 représente un exemple d'une marque 60 de couleur susceptible d'être affichée par un écran 48 pour identifier la scène 2. Dans ce mode de réalisation, la marque 60 est constituée de seulement deux couleurs spécifiques notées CS₁ et CS₂. De plus, dans cet exemple particulier, ces couleurs CS₁ et CS₂ sont juxtaposées, en alternance, dans toute direction X, par exemple horizontale. Plus précisément, la marque 60 comporte ici :
- des barres verticales 62 de couleur uniforme CS₁, et
- des barres verticales 64 de couleur uniforme CS₂.

Les barres 62 et 64 sont disposées les unes immédiatement à côté des autres dans toute direction X en alternant une barre 62 puis une barre 64 pour former un code-barres à une dimension. La largeur et la position de chacune des barres 62 et 64 sont choisies de manière à coder une information supplémentaire. L'information supplémentaire peut être toute information, de préférence, autre que l'identifiant du spectacle ou de la scène. L'information supplémentaire est par exemple la date et l'heure à laquelle cette marque 60 a été affichée. Il peut aussi s'agir de la nature du spectacle ou du nom du spectacle actuellement joué dans la scène 2.

Le fonctionnement du système 40 va maintenant être décrit plus en détail en référence au procédé de la figure 3.

Initialement, lors d'une étape 78, les panneaux d'affichages 46 sont insérés dans la scène 2.

Ensuite, lors d'une étape 80, une marque de couleur propre à identifier le spectacle joué dans la scène 2 est obtenue. Cette marque permet d'identifier de façon unique ce spectacle parmi une multitude de spectacles joués simultanément dans d'autres scènes géographiquement distinctes de la scène 2 et où le procédé d'identification décrit ici est aussi mis en œuvre.

Par la suite, on considère que c'est la marque 60 qui est obtenue lors de cette étape 80 pour identifier le match de football joué sur le terrain 4.

Pour obtenir la marque 60, les deux couleurs spécifiques CS₁ et CS₂ sont d'abord sélectionnées parmi l'ensemble des couleurs possibles affichables par les panneaux d'affichage 46 et susceptibles d'être captées par la caméra 12. Cette combinaison de couleurs est sélectionnée de façon à permettre l'identification de la scène 2 par l'appareil 44 et donc du spectacle qui s'y joue. De préférence, c'est l'appareil 44 qui sélectionne automatiquement les couleurs spécifiques CS₁ et CS₂ parmi l'ensemble des couleurs disponibles et affichables par les panneaux d'affichage 46. Pour cela l'appareil 44 prend également en compte les couleurs spécifiques déjà utilisées pour identifier d'autres spectacles que celui qui se déroule dans la scène 2. A cet effet, typiquement, il tient compte du contenu de la base de données 52. De préférence, il tient également compte d'une liste prédéterminée de couleurs prohibées. Les couleurs prohibées sont des couleurs inappropriées pour distinguer une scène d'une autre. Par exemple, dans le cas où plusieurs scènes sont des terrains de football, les couleurs vertes qui correspondent aux couleurs de la pelouse de ces terrains sont des couleurs prohibées.

Pour chaque couleur disponible, l'appareil 44 dispose des valeurs Rᵢ, Gᵢ et Bᵢ qui codent cette couleur. Ainsi, lors de l'étape 80, l'appareil 44 sélectionne les valeurs R₁, G₁ et B₁ qui codent la couleur spécifique CS₁ et les valeurs R₂, G₂ et B₂ qui codent la couleur spécifique CS₂.

Lors de l'étape 80, pour chaque valeur Rᵢ, Gᵢ et Bᵢ, l'appareil 44 sélectionne aussi automatiquement des marges de tolérance. Par exemple, pour la valeur Rᵢ, l'appareil 44 sélectionne une marge haute Mh_{Ri} et une marge basse Mb_{Ri}. Ici, les marges Mh_{Ri} et Mb_{Ri} sont choisies pour que chaque marge de tolérance soit inférieure à 10 % ou 5 % ou 1 % de l'amplitude de la plage des valeurs possibles pour la valeur Rᵢ. De préférence, chaque marge de tolérance est également supérieure à 0,1 % ou 0,5 % de l'amplitude de la plage des valeurs possibles pour la valeur Rᵢ. Ici, les marges Mh_{G1}, Mb_{G1} pour la valeur G₁ et les marges Mh_{B1} et Mb_{B1} pour la valeur B₁ sont choisies de façon identique à ce qui a été décrit pour les marges Mh_{Ri} et Mb_{Ri}. Pour simplifier, ici, les marges Mh_{R1}, Mh_{G1}, Mh_{B1}, Mb_{R1}, Mb_{G1} et Mb_{B1} sont toutes égales. Les marges Mh_{R2}, Mh_{G2}, Mh_{B2}, MbR2, Mb_{G2} et MbB2 sur les valeurs R₂, G₂ et B₂ qui codent la couleur CS₂ sont sélectionnées de la même manière.

Lors d'une étape 82, les couleurs spécifiques CS₁ et CS₂ sélectionnées lors de l'étape 80, sont enregistrées dans la base de données 52 associées à un identifiant de la scène 2. Plus précisément, l'appareil 44 enregistre dans la base de données 52, les valeurs R₁, G₁, B₁ et R₂, G₂, B₂ ainsi que les marges de tolérance sélectionnées lors de l'étape 80 pour chacune de ces valeurs.

Ensuite, lors d'une étape 84, pendant le déroulement du match et pendant chaque période active, l'appareil 44 commande les panneaux d'affichage 46 pour que chacun d'entre eux affiche simultanément la marque 60. L'affichage de la marque 60 est continu pendant toute la durée de la période active. La durée de la période active est suffisamment longue pour qu'au moins une des images filmées par la caméra 12 comporte cette marque 60 lorsqu'elle est affichée par les panneaux d'affichage 46. Par exemple, la durée de la période active est supérieure ou égale à 0,03 s, 0,05 s ou 0,1 s.

De manière à ce que l'affichage de la marque 60 reste furtif, c'est-à-dire indétectable à l'œil nu par un spectateur, la durée de la période active est ici choisie inférieure à 0,5 s et, de préférence, inférieure à 0,3 s ou 0,2 s. Elle est par exemple égale à 0,1 s à plus ou moins 15 % près.

Les périodes actives sont séparées les unes des autres par des périodes inactives où les panneaux d'affichage 46 n'affichent pas la marque 60 ni aucune autre marque susceptible de permettre l'identification de la scène 2.

Dans ce mode de réalisation, lors d'une étape 86, pendant chaque période inactive, les panneaux d'affichage 46 sont commandés, par exemple par l'appareil 44, pour afficher des informations à destination des spectateurs. Ces informations sont dépourvues de marque 60. Par exemple, les panneaux d'affichage 46 sont utilisés pendant les périodes inactives pour afficher de la publicité. Pour que ces informations soient visibles et compréhensibles par les spectateurs, la durée de la période inactive est par exemple supérieure à 1 s ou 20 s ou 30 s ou 1 min. Ici, la durée de la période inactive est choisie égale à 2 s.

Les étapes 84 et 86 sont réitérées pendant toute la durée du match.

En parallèle, lors d'une étape 90, le spectateur 10 filme à l'aide de sa caméra 12 le match et distribue la vidéo ainsi filmée par l'intermédiaire de la plate-forme 14. Étant donné que les panneaux d'affichage 46 sont répartis tout autour du terrain 4, quelle que soit la position du spectateur 10, de nombreuses images de la vidéo qu'il filme comportent des panneaux d'affichage 46.

En parallèle des étapes 84 et 86 et de l'étape 90, pour mettre fin rapidement à la distribution illégale de la vidéo du match joué sur le terrain 4, lors d'une étape 100, l'appareil 44 télécharge à intervalle prédéterminé des images des différentes vidéos disponibles sur la plate-forme 14. Par exemple, pour chaque vidéo disponible, l'appareil 44 télécharge une séquence de la vidéo dont la durée est supérieure à la période inactive pour être sûr que si l'un des panneaux d'affichage 46 se trouve continûment dans l'axe optique de la caméra 12, alors cette séquence comporte au moins une image dans laquelle la marque 60 est apparente.

Ensuite, lors d'une étape 102, dans chaque image de chaque séquence téléchargée, l'appareil 44 cherche si la marque 60 est présente dans cette image.

Par exemple, pour cela, lors d'une opération 104, l'appareil 44 compte dans cette image le nombre de pixels Nₚ qui ont une couleur qui correspond à la couleur CS₁. A cet effet, chaque valeur Rₚ, Gₚ et Bₚ qui code la couleur du pixel est comparée, respectivement, aux plages [R₁-Mb_{R1} ; R₁+Mh_{R1}], [G₁-Mb_{G1} ; G₁+Mh_{G1}] et [B₁-Mb_{B1} ; B₁+Mh_{B1}]. Si chacune des valeurs Rₚ, Gₚ et Bₚ est située à l'intérieur de la plage visée, alors le compteur du nombre Nₚ est incrémenté de un. Dans le cas contraire, ce compteur n'est pas incrémenté.

Ensuite, une fois que l'appareil 44 a parcouru l'ensemble des pixels de l'image téléchargée, lors d'une opération 106, le nombre Nₚ est comparé à un seuil S₁ prédéterminé. Par exemple, pour cela, l'appareil compare le ratio 100x(Nₚ/P_{T}) à ce seuil S₁, où P_{T} est le nombre total de pixels dans l'image téléchargée. Dans ce cas, le seuil S₁ est supérieur ou égal à 0,5 % ou 1 % ou 5 %.

Si le rapport 100x(Nₚ/P_{T}) est inférieur au seuil S₁, alors l'appareil 44 indique que la couleur spécifique CS₁ n'a pas été trouvée dans l'image téléchargée. Dans ce cas, le procédé retourne directement à l'opération 104 pour traiter l'image suivante de la séquence téléchargée.

Dans le cas contraire, c'est-à-dire si le rapport 10₀x(_{N}p/PT) dépasse le seuᵢl S1, lors d'une opération 110, l'appareil 44 indique que la couleur CS1 a été trouvée dans l'image téléchargée. Dans ce cas, les opérations 104 à 110 sont réitérées mais cette fois-ci pour la couleur CS2. Dans le cas de la couleur CS2, le seuil prédéterminé S1 est remplacé par un seuil prédéterminé S₂ supérieur ou égal à 0,5 % ou 1 % ou 5 %. Le seuil S₂ n'est pas nécessairement égal au seuil S₁.

A l'issue de l'étape 102, si les deux couleurs spécifiques CS₁ et CS₂ ont été trouvées dans l'image téléchargée, lors d'une étape 112, l'appareil 44 identifie que la scène filmée est la scène 2. Pour cela, il recherche dans la base de données 52 l'identifiant associé aux couleurs spécifiques CS₁ et CS₂. Si la scène 2 est identifiée, lors de l'étape 112, l'appareil 44 lit également et extrait les informations supplémentaires codées dans le code-barres de la marque 60. Ces informations supplémentaires extraites sont ensuite utilisées et/ou stockées par l'appareil 44 pour un traitement automatique ultérieur.

Lors d'une étape 114, dès que le spectacle a été identifié, l'appareil 44 transmet immédiatement à la plate-forme 14 une commande d'interruption de la distribution de cette vidéo.

Lors d'une étape 116, en réponse à la réception de cette commande d'interruption, la plate-forme 14 suspend immédiatement la distribution de cette vidéo. Par exemple, la plate-forme 14 arrête et interdit toute diffusion en streaming de cette vidéo vers des terminaux tels que les terminaux 20.

Si l'ensemble des images de la séquence vidéo a été traité comme décrit précédemment, l'appareil 44 télécharge une nouvelle séquence vidéo depuis la plate-forme 14 et traite celle-ci comme décrit ci-dessus.

De nombreux autres modes de réalisation sont possibles. Par exemple, les fonctionnalités pour identifier la vidéo et pour en interdire la distribution par la plate-forme 14 ont été décrites ici dans le cas particulier où elles sont toutes les deux implémentées à l'intérieur du même appareil 44. En variante, seules les fonctionnalités pour identifier la vidéo sont implémentées dans l'appareil 44 et les fonctionnalités pour interdire la distribution d'une vidéo identifiée par l'appareil 44 sont alors implémentées dans un autre appareil distinct de l'appareil 44 mais connecté à celui-ci, par exemple, par l'intermédiaire du réseau 18.

Dans d'autres exemples, les tribunes 6 n'entourent pas le terrain 4, ou la scène 2 ne comporte pas de tribunes 6.

Le dispositif 42 d'identification de la scène peut être utilisé à d'autres fins que celles consistant à interdire la distribution d'une vidéo identifiée. Par exemple, le dispositif 42 est incorporé dans un système qui associe automatiquement à la vidéo des informations supplémentaires sur le spectacle identifié dans cette vidéo. Par exemple, les informations supplémentaires sont des renseignements sur l'emplacement géographique du spectacle, son histoire ou toute autre information spécifique à ce spectacle. Lorsque le dispositif 42 est utilisé à d'autres fins que l'interruption de la distribution d'une vidéo depuis la plate-forme 14, il n'est pas nécessairement connecté à une telle plate-forme et peut télécharger la vidéo depuis n'importe quelle source.

D'autres modes de réalisation de l'appareil 13 sont possibles. Par exemple, il peut s'agir d'un ordinateur portable équipé d'une webcam.

De même, d'autres modes de réalisation de la plate-forme 14 sont possibles. Par exemple, en variante, la plate-forme 14 est la plate-forme exploitée sous le nom commercial de « Livestream » ou « Ustream » ou « Snapchat».

Les panneaux d'affichage peuvent prendre différentes formes. Par exemple, dans un mode de réalisation particulier, le panneau d'affichage a la forme d'une colonne verticale qui affiche la couleur spécifique ou la juxtaposition de couleurs spécifiques sur toute sa périphérie horizontale. Ainsi, ce panneau d'affichage présente un angle d'ouverture horizontale égal à 360°. Dans un autre mode de réalisation, le panneau d'affichage est celui utilisé pour afficher les scores ou un écran géant. Le panneau d'affichage peut aussi comporter un enrouleur commandable apte à enrouler et, en alternance, dérouler une affiche pour rendre visible et, en alternance, masquer cette affiche. Dans ce cas, au préalable, une affiche comportant la marque 60 est installée dans ce panneau d'affichage.

Le dispositif d'identification peut être simplifié. Par exemple, il peut ne comporter qu'un seul panneau d'affichage 46.

De nombreux autres modes de réalisation sont possibles pour la marque 60. Par exemple, la marque 60 peut être remplacée par une juxtaposition, non pas de simplement deux couleurs mais au contraire de trois ou quatre ou au moins cinq couleurs spécifiques. Dans le cas où la marque comporte plusieurs couleurs spécifiques, il est possible de comparer la somme des nombres Nₚ comptés pour chacune de ces couleurs spécifiques à un seul seuil et d'indiquer que la marque se trouve dans l'image si cette somme dépasse ce seuil.

Lorsque la marque 60 comporte plusieurs couleurs spécifiques, il est aussi possible d'indiquer que la marque 60 se trouve dans l'image téléchargée dès que le nombre Nₚ compté pour une seule de ces couleurs spécifiques dépasse le seuil prédéterminé associé à cette couleur spécifique.

Dans une variante simplifiée, une seule couleur spécifique est utilisée pour identifier le spectacle et non pas une juxtaposition de couleurs spécifiques.

Dans le cas où une seule couleur spécifique CS₁ est utilisée pour identifier la scène, l'appareil 44 peut quand même être programmé pour afficher un code-barres en utilisant au moins deux couleurs CS₂ et CS₃. Chacune des valeurs codant ces couleurs CS₂ et CS₃ sont alors choisies à l'intérieur des plages [R₁-Mb_{R1} ; R₁+Mh_{R1}], [G₁-Mb_{G1} ; G₁+Mh_{G1}] et [B₁-Mb_{B1} ; B₁+Mh_{B1}]. Toutefois, les couleurs CS₂ et CS₃ sont légèrement différentes l'une de l'autre, ce qui permet de dessiner un code-barres tout en n'utilisant que des couleurs qui correspondent à une seule et même couleur spécifique CS₁. Ainsi, à cause des marges de tolérance, pour l'identification du spectacle, ces deux couleurs CS₂ et CS₃ sont traitées comme une seule et même couleur spécifique CS₁. Par contre, lors de l'opération 112, une information supplémentaire codée par l'utilisation de ces couleurs CS₂ et CS₃ peut toujours être lue dans l'image téléchargée.

En variante, les marges de tolérances sur chaque couleur spécifique ne sont pas utilisées et peuvent être omises.

Dans un autre mode de réalisation, la marque 60 prend la forme d'un code-barres, non pas à une dimension comme décrit en regard de la figure 2, mais à deux dimensions. Dans ce cas, par exemple, la marque 60 prend la forme d'un QR code.

Dans un mode de réalisation simplifié, la marque 60 ne code aucune information supplémentaire. Dans ce cas, la marque 60 n'a pas besoin de prendre la forme d'un barre-code. Par exemple, la marque 60 peut prendre la forme d'un damier dont les cases sont, en alternance, d'une première et d'une seconde couleurs spécifiques. Lorsque la marque 60 ne forme pas un code-barres, l'opération de lecture d'un tel code-barres est omise.

La marque 60 a été décrite dans le cas particulier où le codage des couleurs est le codage RGB. Toutefois, d'autres codages de couleurs sont possibles. Par exemple, les codages suivants peuvent être utilisés à la place du codage RGB :
- le codage RVBA (Rouge Vert Bleu Alpha),
- le codage Y'CbCr,
- le code HSB (Hue Saturation Brightness),
- HSL (Hue Saturation Lightness),

Un spectacle peut être joué sur un ensemble de plusieurs scènes géographiquement éloignées les unes des autres et pour lesquelles on souhaite pouvoir interdire la distribution de toutes vidéos filmées dans l'une quelconque de ces scènes. Dans ce cas, la même marque 60 est utilisée sur chacune de ces scènes. En effet, pour interdire la distribution d'une vidéo de ce spectacle, il n'est pas nécessaire d'identifier précisément la scène parmi l'ensemble des scènes de cet ensemble où a été filmée cette vidéo. Dans ce cas-là, la marque n'identifie pas une scène spécifique mais seulement le spectacle. Ainsi, dans cette variante, l'identifiant du spectacle et l'identifiant de la scène ne sont pas interchangeables. A titre d'illustration, un tel spectacle peut être les jeux olympiques qui se déroulent sur une multitude de stades, et donc de scènes différentes.

Lors de chaque période active, la marque affichée n'est pas nécessairement la même que la marque affichée lors d'une période active précédente. Par exemple, différentes marques s'affichent les unes après les autres dans un ordre prédéterminé. Dans ce cas, la base de données 52 associe à chacune de ces différentes marques, le même identifiant de spectacle. A l'inverse, avant chaque période active, la marque à afficher peut aussi être tirée aléatoirement dans une liste prédéterminée contenant plusieurs marques différentes susceptibles d'être affichées pour identifier le même spectacle. Les différentes marques affichées dans la même scène se distinguent alors, par exemple, visuellement les unes des autres par leur forme ou par leur couleur.

De même, l'emplacement où s'affiche la marque peut aussi être modifié d'une période active à la suivante. Par exemple, la marque est affichée une fois à droite de l'écran 48 puis une fois à gauche de cet écran 48. Il est aussi possible d'afficher en alternance la marque sur un premier dispositif d'affichage puis, lors de la période active suivante, sur un second dispositif d'affichage situé à un emplacement différent dans la scène.

L'affichage de la marque peut être déclenché de façon automatique ou manuelle. Par exemple, l'affichage de la marque peut être déclenché par un opérateur en appuyant manuellement sur un bouton. A l'inverse, comme décrit précédemment, le déclenchement de la période active peut être un événement automatique déclenché de façon périodique. Dans un autre mode de réalisation, la durée des périodes inactives est tirée de façon aléatoire de sorte que l'affichage de la marque n'est pas périodique.

Dans un autre mode de réalisation, la mise en œuvre du procédé d'identification n'est pas rendue furtive. Par exemple, dans ce cas, la période active est supérieure à 1 s ou 10 s ou 1 min. Dans une autre variante, les périodes inactives sont omises et une seule période active est utilisée. Cette unique période active dure alors tant que le procédé d'identification est mis en œuvre.

Pendant les périodes inactives, l'affichage d'informations par les panneaux d'affichage peut être omis. Par exemple, pendant les périodes inactives, les panneaux d'affichage sont éteints.

Les étapes 80 et 82 peuvent être réalisées différemment. Par exemple, la base de données 52 est pré-remplie avec un grand nombre de marques distinctes préenregistrées. Ensuite, l'une de ces marques est affectée à la scène 2. Pour cela, l'identifiant de la scène 2 est associé à cette marque dans la base de données 52.

Dans un autre mode de réalisation, l'étape 80 comporte l'obtention d'une image de la scène capturée, par exemple, avant que le spectacle n'y soit joué. Ensuite, cette image est analysée pour identifier les couleurs présentes dans cette image. Puis, lors de l'étape 80, l'appareil 44 sélectionne automatiquement, en tant que couleur spécifique, une ou plusieurs couleurs qui ne sont pas présentes dans l'image analysée ou qui représentent moins de 1 % ou 0,5 % des pixels de l'image analysée.

La recherche d'une marque de couleur peut être réalisée différemment que par comptage des seuls pixels dont la couleur correspond à la ou aux couleurs spécifiques. Par exemple, un histogramme des couleurs de l'image téléchargée est construit par comptage des pixels de chaque couleur. Cet histogramme indique pour chaque couleur de l'image le nombre de pixels ayant cette couleur. Ensuite, la hauteur de la barre correspondant à la couleur spécifique recherchée est comparée au seuil prédéterminé. Si ce seuil est franchi, l'appareil 44 indique que la couleur spécifique a été trouvée dans l'image. Sinon, l'appareil 44 indique que cette couleur spécifique n'a pas été trouvée dans cette image.

Lors de l'étape 84, il est aussi possible de commander l'affichage de la marque 60 seulement sur un nombre limité des panneaux 46 présents dans la scène 2.

En variante, le seuil prédéterminé est un nombre absolu de pixels et non pas un pourcentage. Dans ce cas, le seuil prédéterminé est supérieur ou égal à 1 pixel et, de préférence, supérieur à 5 ou 10 pixels et, avantageusement, supérieur à 10000, 20000, 80000, 160000, 800000 ou 2400000 pixels. Lors de l'étape 110, c'est donc le nombre Nₚ qui est directement comparé à ce seuil prédéterminé.

La recherche peut aussi comporter une opération préalable d'identification des zones de l'image susceptibles de contenir les couleurs spécifiques recherchées suivie de la recherche de la couleur spécifique uniquement à l'intérieur de ces zones sélectionnées. Par exemple, si le panneau d'affichage est rectangulaire, l'appareil 44 sélectionne dans l'image téléchargée uniquement des zones comprenant un quadrilatère.

## Revendications

1. Procédé d'identification d'un spectacle dans une vidéo filmée par une caméra d'un spectateur, comportant:
a) parmi un ensemble de plusieurs couleurs possibles, la sélection (80) d'une ou plusieurs couleurs spécifiques pour identifier ce spectacle, chacune des couleurs possibles étant apte à être captée par une caméra quelconque d'un spectateur,
b) l'enregistrement (82), dans une base de données, d'un identifiant du spectacle associé à des valeurs qui codent la ou les couleurs spécifiques sélectionnées pour identifier ce spectacle,
c) avant que le spectacle ne soit filmé par la caméra du spectateur, l'insertion (78) à l'intérieur d'une scène dans laquelle est joué le spectacle, d'au moins un panneau d'affichage commandable apte à afficher la ou les couleurs spécifiques sélectionnées, puis
d) la commande, par un appareil électronique de traçage du spectacle, de l'affichage (84), par chaque panneau d'affichage et sans tenir compte de l'éclairage de la scène, de la ou des couleurs spécifiques sélectionnées à un moment où la caméra du spectateur filme la scène, de manière à ce que cette ou ces couleurs spécifiques affichées soient capturées par la caméra du spectateur,
e) une fois qu'au moins une première image de la scène a été capturée par la caméra du spectateur, l'appareil électronique de traçage du spectacle :
• télécharge (100) au moins une image de la vidéo filmée par le spectateur, puis
• recherche (102), dans l'image téléchargée, la ou les couleurs spécifiques associées, par la base de données, à un identifiant de ce spectacle, puis
• si la ou les couleurs spécifiques sont trouvées dans l'image téléchargée, identifie (112) le spectacle filmé à l'aide de l'identifiant de spectacle associé par la base de données à cette ou ces couleurs spécifiques et, sinon, n'identifie pas ce spectacle à partir de cette image téléchargée et à l'aide de cet identifiant.

2. Procédé selon la revendication 1, dans lequel la recherche de la ou des couleurs spécifiques dans l'image téléchargée comporte :
- pour chaque couleur spécifique associée, par la base de données, à l'identifiant de ce spectacle, le comptage (104) du nombre de pixels de l'image téléchargée dont la couleur correspond à cette couleur spécifique,
- la comparaison (106) du nombre de pixels compté à un seuil prédéterminé, et
- l'indication (110) que la couleur spécifique a été trouvée dans l'image téléchargée uniquement si lors de la comparaison le seuil prédéterminé est dépassé.

3. Procédé selon la revendication 2, dans lequel lors du comptage du nombre de pixels, la couleur d'un pixel est considérée comme correspondant à la couleur spécifique uniquement si chaque valeur codant la couleur de ce pixel est comprise entre C_{¡}-Mb_{¡} et Cᵢ+Mhᵢ, où :
- Cᵢ est égal à la valeur correspondante codant la couleur spécifique, et
- Mbᵢ et Mhᵢ sont des marges de tolérances, ces marges Mbᵢ et Mhᵢ étant supérieures à 0,1 % de l'amplitude de la plage des valeurs possibles pour la valeur Cᵢ.

4. Procédé selon l'une quelconque des revendications précédentes, dans lequel :
- lors de l'étape a), plusieurs couleurs spécifiques sont sélectionnées pour identifier le spectacle,
- lors de l'étape d), ces couleurs spécifiques sont affichées juxtaposées les unes aux autres de manière à former un code-barres à une ou deux dimensions dans lequel est encodée une information supplémentaire, et
- uniquement si la scène est identifiée dans l'image téléchargée, en réponse, l'appareil de traçage lit (112) ce code-barres à une ou deux dimensions et en extrait l'information supplémentaire.

5. Procédé selon l'une quelconque des revendications précédentes, dans lequel :
- l'affichage, par le panneau d'affichage, de la ou des couleurs spécifiques est activé en continu uniquement pendant des périodes actives successives, et
- entre deux périodes actives successives, l'affichage, par le panneau d'affichage, de la ou des couleurs spécifiques est désactivé de sorte que les périodes actives sont séparées temporellement les unes des autres par des périodes inactives, la durée de chaque période inactive étant supérieure à une seconde.

6. Procédé selon la revendication 5, dans lequel la durée de chaque période active est comprise entre 0,05 seconde et 0,5 seconde.

7. Procédé selon la revendication 5 ou 6, dans lequel pendant les périodes inactives chaque panneau d'affichage est commandé (86) pour afficher des informations à destination des spectateurs, ces informations étant impropres à permettre une identification du spectacle filmé, par l'appareil de traçage.

8. Procédé comprenant :
- un procédé selon l'une des revendications précédentes ; et
- un procédé automatique d'interruption de la distribution d'une vidéo téléchargeable à partir d'une plate-forme de partage de vidéos, **caractérisé en ce que** ce procédé comporte :
- l'identification (100, 102, 112) d'un spectacle prédéterminé dans la vidéo téléchargeable depuis la plate-forme de partage de vidéos en mettant en œuvre le procédé conforme à l'une des quelconques revendications précédentes, puis
- si le spectacle prédéterminé est identifié dans la vidéo téléchargeable, la transmission automatique (114), à la plate-forme de partage de vidéos, d'une demande d'interruption de la distribution de cette vidéo et, en réponse, la plate-forme de partage de vidéos interdit (116) le téléchargement de cette vidéo, et
- si le spectacle prédéterminé n'est pas identifié dans la vidéo téléchargeable, alors l'absence de transmission, à la plate-forme de partage de vidéos, de la demande d'interruption de la distribution de cette vidéo.

9. Appareil électronique de traçage d'un spectacle dans une vidéo filmée par une caméra d'un spectateur pour la mise en œuvre des étapes d) et e) du procédé conforme à l'une des quelconques revendications 1 à 8, cet appareil électronique comportant :
- un microprocesseur (54) programmé pour télécharger au moins une image de la vidéo filmée par le spectateur, pour rechercher, dans l'image téléchargée, la ou les couleurs spécifiques associées, par la base de données, à l'identifiant de ce spectacle, puis, si la ou les couleurs spécifiques sont trouvées dans l'image téléchargée, identifier le spectacle filmé à l'aide de l'identifiant de spectacle associé par la base de données (52) à cette ou ces couleurs spécifiques et, sinon, ne pas identifier ce spectacle dans la vidéo filmée à partir de cette image téléchargée, et
- une mémoire (56) comportant la base de données (52) comportant l'identifiant du spectacle associé à des valeurs qui codent une ou des couleurs spécifiques sélectionnées pour identifier ce spectacle.

10. Support d'enregistrement d'informations, **caractérisé en ce qu'**il comporte des instructions pour la mise en œuvre d'un procédé conforme à l'une quelconque des revendications 1 à 8, lorsque ces instructions sont exécutées par un microprocesseur.

## Patentansprüche

1. Verfahren zur Identifizierung einer Darbietung in einem Video, das von einer Kamera eines Zuschauers gefilmt wird, aufweisend:
a) aus einer Menge mehrerer möglicher Farben, das Auswählen (80) einer oder mehrerer bestimmter Farben, um diese Darbietung zu identifizieren, wobei jede der möglichen Farben geeignet ist, von einer beliebigen Kamera eines Zuschauers gefilmt zu werden,
b) das Speichern (82), in einer Datenbank, einer Kennung der Darbietung, die Werten zugeordnet ist, die die ausgewählte(n) bestimmte(n) Farben codieren, um diese Darbietung zu identifizieren,
c) bevor die Darbietung von der Kamera des Zuschauers gefilmt wird, das Einfügen (78) mindestens einer steuerbaren Anzeigetafel, die geeignet ist, die ausgewählte(n) bestimmte(n) Farben anzuzeigen, in einen Schauplatz, an dem die Darbietung gespielt wird, dann
d) das Steuern, durch eine elektronische Vorrichtung zur Verfolgung der Darbietung, der Anzeige (84), durch jede Anzeigetafel und ohne Berücksichtigung der Beleuchtung des Schauplatzes, der ausgewählten bestimmten Farbe(n) zu einem Zeitpunkt, zu dem die Kamera des Zuschauers den Schauplatz filmt, so dass diese angezeigte(n) bestimmte(n) Farben von der Kamera des Zuschauers aufgenommen werden,
e) sobald mindestens ein erstes Bild des Schauplatzes von der Kamera des Zuschauers aufgenommen wurde, die elektronische Vorrichtung zur Verfolgung der Darbietung:
• mindestens ein Bild des Videos herunterlädt (100), das vom Zuschauer gefilmt wird, dann
• im heruntergeladenen Bild nach der oder den bestimmten Farbe(n) sucht (102), die von der Datenbank einer Kennung dieser Darbietung zugeordnet sind, dann
• wenn die bestimmte(n) Farben im heruntergeladenen Bild gefunden werden, die gefilmte Darbietung mithilfe der Darbietungskennung identifiziert (112), die von der Datenbank dieser oder diesen bestimmten Farbe(n) zugeordnet ist, und anderenfalls diese Darbietung anhand dieses heruntergeladenen Bilds und mithilfe dieser Kennung nicht identifiziert.

2. Verfahren nach Anspruch 1, wobei die Suche nach der oder den bestimmten Farbe(n) im heruntergeladenen Bild Folgendes aufweist:
- für jede bestimmte Farbe, die von der Datenbank der Kennung dieser Darbietung zugeordnet ist, das Zählen (104) der Anzahl von Bildpunkten des heruntergeladenen Bilds, deren Farbe dieser bestimmten Farbe entspricht,
- das Vergleichen (106) der gezählten Anzahl von Bildpunkten mit einer vorbestimmten Schwelle, und
- das Angeben (110), dass die bestimmte Farbe im heruntergeladenen Bild gefunden wurde, nur dann, wenn beim Vergleichen die vorbestimmte Schwelle überschritten wird.

3. Verfahren nach Anspruch 2, wobei beim Zählen der Anzahl von Bildpunkten die Farbe eines Bildpunkts nur dann als mit der bestimmten Farbe übereinstimmend erachtet wird, wenn jeder Wert, der die Farbe dieses Pixels codiert, zwischen Cᵢ-Mbᵢ und Cᵢ+Mhᵢ liegt, wobei:
- Cᵢ gleich dem entsprechenden Wert ist, der die bestimmte Farbe codiert, und
- Mbᵢ und Mhᵢ Toleranzspannen sind, wobei diese Spannen Mbᵢ und Mhᵢ größer als 0,1 % der Amplitude des Bereichs der möglichen Werte für die Farbe Cᵢ sind.

4. Verfahren nach einem der vorhergehenden Ansprüche, wobei:
- beim Schritt a) mehrere bestimmte Farben ausgewählt werden, um die Darbietung zu identifizieren,
- beim Schritt d) diese bestimmten Farben nebeneinander angezeigt werden, so dass sie einen ein- oder zweidimensionalen Strichcode bilden, in dem eine Zusatzinformation codiert ist, und
- nur dann, wenn der Schauplatz im heruntergeladenen Bild identifiziert ist, daraufhin die Verfolgungsvorrichtung (112) diesen ein- oder zweidimensionalen Strichcode liest und die Zusatzinformation daraus extrahiert.

5. Verfahren nach einem der vorhergehenden Ansprüche, wobei:
- das Anzeigen der bestimmten Farbe(n) von der Anzeigetafel nur während aufeinanderfolgender aktiver Zeitspannen durchgehend aktiviert ist, und
- zwischen zwei aufeinanderfolgenden aktiven Zeitspannen das Anzeigen der bestimmten Farbe(n) von der Anzeigetafel deaktiviert ist, so dass die aktiven Zeitspannen durch inaktive Zeitspannen zeitlich voneinander getrennt sind, wobei die Dauer jeder inaktiven Periode länger als eine Sekunde ist.

6. Verfahren nach Anspruch 5, wobei die Dauer jeder aktiven Zeitspanne zwischen 0,05 Sekunden und 0,5 Sekunden liegt.

7. Verfahren nach Anspruch 5 oder 6, wobei während der inaktiven Zeitspannen jede Anzeigetafel so gesteuert (86) wird, dass sie Informationen anzeigt, die für die Zuschauer bestimmt sind, wobei diese Informationen ungeeignet sind, eine Identifizierung der gefilmten Darbietung durch die Verfolgungsvorrichtung zu gestatten.

8. Verfahren umfassend:
- ein Verfahren nach einem der vorhergehenden Ansprüche; und
- ein automatisches Verfahren zur Unterbrechung der Verteilung eines Videos, das von einer Video-Sharing-Plattform herunterladbar ist, **dadurch gekennzeichnet, dass** dieses Verfahren Folgendes aufweist:
- das Identifizieren (100, 102, 112) einer vorbestimmten Darbietung in dem Video, das von der Video-Sharing-Plattform herunterladbar ist, durch Umsetzung des Verfahrens nach einem der vorhergehenden Ansprüche, dann
- wenn die vorbestimmte Darbietung im herunterladbaren Video identifiziert ist, das automatische Übertragen (114) einer Anforderung zur Unterbrechung der Verteilung dieses Videos an die Video-Sharing-Plattform, und daraufhin untersagt die Video-Sharing-Plattform (116) das Herunterladen dieses Videos, und
- wenn die vorbestimmte Darbietung im herunterladbaren Video nicht identifiziert ist, dann das Nichtübertragen der Anforderung zur Unterbrechung der Verteilung dieses Videos an die Video-Sharing-Plattform.

9. Elektronische Vorrichtung zur Verfolgung einer Darbietung in einem Video, das von einer Kamera eines Zuschauers gefilmt wird, zur Durchführung der Schritte d) und e) des Verfahrens nach einem der Ansprüche 1 bis 8, wobei diese elektronische Vorrichtung Folgendes aufweist:
- einen Mikroprozessor (54), der dafür programmiert ist, mindestens ein Bild des Videos herunterzuladen, das vom Zuschauer gefilmt wird, um im heruntergeladenen Bild nach der oder den bestimmten Farbe(n) zu suchen, die von der Datenbank der Kennung dieser Darbietung zugeordnet sind, dann, wenn die bestimmte(n) Farben im heruntergeladenen Bild gefunden werden, die gefilmte Darbietung mithilfe der Darbietungskennung zu identifizieren, die von der Datenbank (52) dieser oder den bestimmten Farben zugeordnet ist, und anderenfalls diese Darbietung im gefilmten Video anhand dieses heruntergeladenen Bilds nicht zu identifizieren, und
- einen Speicher (56), der die Datenbank (52) aufweist, die die Kennung der Darbietung aufweist, die Werten zugeordnet ist, die eine oder mehrere bestimmte Farben codieren, die auswählt sind, um diese Darbietung zu identifizieren.

10. Informationsspeichermedium, **dadurch gekennzeichnet, dass** es Anweisungen für die Durchführung eines Verfahrens nach einem der Ansprüche 1 bis 8, wenn diese Anweisungen von einem Mikroprozessor ausgeführt werden, aufweist.

## Claims

1. Method for identifying a show in a video filmed by a camera of a spectator, including:
a) among a set of several possible colours, the selection (80) of one or more specific colours to identify this show, each of the possible colours being suitable for being captured by any camera of a spectator,
b) the recording (82), in a database, of an identifier of the show associated with values which code the specific colour or colours selected to identify this show,
c) before the show is filmed by the camera of the spectator, the insertion (78) within a scene in which the show is performed of at least one controllable display panel suitable for displaying the selected specific colour or colours, then
d) the commanding, by an electronic device for tracing the show, of the displaying (84), by each display panel and without taking into account the lighting of the scene, of the selected specific colour or colours at a moment when the camera of the spectator films the scene, such that this or these displayed specific colours are captured by the camera of the spectator,
e) once at least a first image of the scene has been captured by the camera of the spectator, the electronic device for tracing the show:
• downloads (100) at least one image of the video filmed by the spectator, then
• searches (102), in the downloaded image, for the specific colour or colours associated, by the database, with an identifier of this show, then
• if the specific colour or colours are found in the downloaded image, identifies (112) the filmed show with the aid of the show identifier associated, by the database, with this or these specific colours and, otherwise, does not identify this show from this downloaded image and with the aid of this identifier.

2. Method according to Claim 1, in which the search for the specific colour or colours in the downloaded image includes:
- for each specific colour associated, by the database, with the identifier of this show, the counting (104) of the number of pixels of the downloaded image for which the colour matches this specific colour,
- the comparison (106) of the number of counted pixels with a predetermined threshold, and
- the indication (110) that the specific colour has been found in the downloaded image only if during the comparison the predetermined threshold is exceeded.

3. Method according to Claim 2, in which when the number of pixels is being counted, the colour of a pixel is considered as matching the specific colour only if each value coding the colour of this pixel is between Cᵢ-Mbᵢ and Cᵢ+Mhᵢ, where:
- Cᵢ is equal to the corresponding value coding the specific colour, and
- Mbᵢ and Mhᵢ are tolerance limits, these limits Mbᵢ and Mhᵢ being greater than 0.1% of the amplitude of the range of possible values for the value Cᵢ.

4. Method according to any one of the preceding claims, in which:
- during step a), several specific colours are selected to identify the show,
- during step d), these specific colours are displayed juxtaposed with one another so as to form a one- or two-dimensional barcode in which additional information is encoded, and
- only if the scene is identified in the downloaded image, in response, the tracing device reads (112) this one- or two-dimensional barcode and extracts the additional information from it.

5. Method according to any one of the preceding claims, in which:
- the displaying, by the display panel, of the specific colour or colours is activated continuously only during successive active periods, and
- between two successive active periods, the displaying, by the display panel, of the specific colour or colours is deactivated such that the active periods are separated in time from one another by inactive periods, the duration of each inactive period being more than one second.

6. Method according to Claim 5, in which the duration of each active period is between 0.05 seconds and 0.5 seconds.

7. Method according to Claim 5 or 6, in which during inactive periods, each display panel is commanded (86), by the tracing device, to display information for spectators, this information being unsuitable to enable an identification of the filmed show.

8. Method comprising:
- a method according to one of the preceding claims; and
- an automatic method for interrupting the distribution of a video that can be downloaded from a video sharing platform, **characterized in that** this method includes:
- the identification (100, 102, 112) of a predetermined show in the video that can be downloaded from the video sharing platform, by implementing the method according to any one of the preceding claims, then
- if the predetermined show is identified in the downloadable video, the automatic transmission (114), to the video sharing platform, of a request to interrupt the distribution of this video and, in response, the video sharing platform prevents (116) the downloading of this video, and
- if the predetermined show is not identified in the downloadable video, then an absence of transmission, to the video sharing platform, of the request to interrupt the distribution of this video.

9. Electronic device for tracing a show in a video filmed by a camera of a spectator for the implementation of steps d) and e) of the method according to any one of Claims 1 to 8, this electronic device including:
- a microprocessor (54) programmed to download at least one image of the video filmed by the spectator, to search, in the downloaded image, for the specific colour or colours associated, by the database, with the identifier of this show, then, if the specific colour or colours are found in the downloaded image, identify the filmed show with the aid of the show identifier associated, by the database (52), with this or these specific colours and, otherwise, not identify this show in the filmed video from this downloaded image, and
- a memory (56) including the database (52) containing the identifier of the show associated with values which code one or more specific colours selected to identify this show.

10. Information recording medium, **characterized in that** it includes instructions to implement a method according to any one of Claims 1 to 8, when these instructions are executed by a microprocessor.
